# EUROPEAN PATENT APPLICATION

(11) **EP 4 823 122 A1**
(43) Date of publication of application: **14.10.2026**
(21) Application number: 25170154.6
(22) Date of filing: 11.04.2025
(51) Int. Cl.: H04S 7/00, H04R 3/04, G10L 21/0208, G10L 21/034, G10L 21/0216

(54) **METHOD AND APPARATUS OF COMPENSATING FOR SOUND INGRESS IN A VEHICLE CABIN**

(71) Applicant: Harman Becker Automotive Systems GmbH, 76307 Karlsbad (DE)
(72) Inventor: SIKORA, Grzegorz, 85221 Dachau (DE)
(74) Representative: Rummler, Felix

(57) **Abstract**

A method of compensating for sound ingress in a vehicle cabin, an apparatus for a vehicle comprising memory and a processor, the processor operable to carry out the method, and a vehicle comprising the processor, at least one speaker and at least one microphone. The method comprising receiving an input from at least one sensor, associating the input with one of a plurality of pre-determined scenarios, receiving an audio signal, and applying a set of pre-determined parameters to the audio signal, the set of pre-determined parameters corresponding to the associated pre-determined scenario. The set of pre-determined parameters comprise altering a sound offset of the audio signal in the vehicle, applying an equaliser to the audio signal, applying a spatial perception processing to the audio signal, or any combination of the above. The method further comprising playing back the audio signal with the applied set of pre-determined parameters.

## Description

The present invention relates to a method of compensating for sound ingress in a vehicle cabin, an apparatus for compensating for sound ingress in a vehicle cabin, and a vehicle.

### BACKGROUND OF THE INVENTION

Spatial audio is a technology that creates a realistic three-dimensional sound experience by making it seem like sounds are coming from all around a listener is becoming more prevalent in the headphone, earphone, loudspeaker and high fidelity (Hi-Fi) industries. Unwanted noise can have a detrimental effect on spatial audio perception. For example, external noise to a controlled environment (such as noise external to headphones, noise external to a vehicle cabin, noise external to a house/apartment with a Hi-Fi set-up, etc.) may penetrate into the controlled environment and affect the spatial perception. Similarly, internal noise to the controlled environment (for example, a hum created by an electrical device in a vehicle cabin, or similar) may also affect the spatial perception.

This issue becomes particularly critical with the growing adoption of immersive sound upmixers (i.e. the process of generating additional speaker signals from a source content with fewer channels) and native spatial audio formats (for example, Dolby Atmos, Sony 360 Reality Audio, Samsung/Google Eclipsa Audio, etc.), as the spatial experience is a key driver of listener satisfaction.

Current practices for parameterization and evaluation of these technologies typically occur in controlled, noise-free environments. This approach fails to capture the significant alterations in spatial perception that occur during real-world conditions (for example real-world driving conditions).

Consequently, a pressing need exists for a practical arrangement that actively compensates for noise ingress (for example, for automotive audio systems), ensuring that the delivered spatial experience aligns with the designer's intent across diverse scenarios (including, for example, various driving scenarios of a vehicle).

### SUMMARY

To achieve the above objectives, the invention sets out a method, an apparatus, and a vehicle as in the claims below.

In a preferred embodiment, a method of compensating for sound ingress in a vehicle cabin is provided. The method includes receiving an input from at least one sensor , associating the input with one of a plurality of pre-determined scenarios, receiving an audio signal, and applying a set of pre-determined parameters to the audio signal, the set of pre-determined parameters corresponding to the associated pre-determined scenario. The set of pre-determined parameters includes altering a sound offset of the audio signal in the vehicle, applying an equaliser to the audio signal (spectral), applying a spatial perception filter and signal processing to the audio signal, or any combination of the above. The method further includes playing back the audio signal with the applied set of pre-determined parameters.

By matching an input from at least one sensor (such as an input from an internal or external microphone, an electronic component of the vehicle, CAN-bus messages, etc.) to a pre-determined scenario and by applying a set of pre-determined parameters to the audio signal based on the pre-determined scenario, the detrimental effects of noise ingress can be effectively mitigated for a variety of driving conditions. Advantageously, a consistent and immersive spatial audio experience is provided to the vehicle occupants for a variety of driving conditions. In other words, the invention provides an in-vehicle audio system and, in particular, an in-vehicle spatial audio system that can deliver a consistently high-quality spatial audio experience for vehicle occupants, regardless of prevailing noise conditions. Accordingly, this allows next generation upmixers and native spatial audio processers to deliver a superior spatial experience, compared to legacy upmixers and native spatial audio processors.

In an embodiment, the spatial perception filter includes one or more of re-aligning a phantom centre of the audio signal in the vehicle; or applying one or more signal processing operations (for example, signal processing altering operations) on one or more (spatially-relevant) components of the audio signal to preserve psychoacoustical perception of spatial depth, envelopment, immersion, and others. The one or more signal processing alteration operations may include one or more of apparent source width (ASW), envelopment (LEV), perceived depth, source localisation, spatial balance, or immersion. Advantageously, a more detailed user-focus can be provided which improves spatial perception and immersion to the vehicle occupants.

In an embodiment, the input includes a signal received from one or more microphones, a processor, vehicle speed message, an ancillary component of the vehicle (for example, an HVAC (heating, ventilation and air-conditioning) system, a seat massage system, or any other mechanical/electric component that emits a noise when in operation), or any combination of the above.

Advantageously, noise ingress can effectively be mitigated for a variety of scenarios including external factors (such as wind noise, tyre noise, etc.), internal factors (such as internal vibrations from a movement of the vehicle, sound emitted from ancillary components of the vehicle such as the HVAC (heating, ventilation and air-conditioning) units or other components, or a combination of those features).

In an embodiment, the pre-determined parameters further includes adjusting a perceived volume, and/or adjusting one or more parameters of the equaliser, adjusting emitted energy of sub-systems relevant for spatial perception, and psychoacousticaly-modeled signal processing. Advantageously, noise ingress can be mitigated more effectively by compensating for the sound ingress with an increase in volume and/or adjustments of the equaliser of the audio signal.

In an embodiment, the method further includes receiving a second input from one of the at least one sensor, and determining a noise ingress level inside the vehicle cabin from the second input and based on the sensor type, wherein the noise ingress level is determined while the audio signal is played back with the applied set of pre-determined parameters. The method further includes adjusting at least one of the set of pre-determined parameters corresponding to the associated pre-determined scenario, applying the adjusted set of pre-determined parameters to the audio signal, and playing back the audio signal with the adjusted set of pre-determined parameters applied to the audio signal.

Advantageously, dynamic comprehensive noise compensation can be provided in real-time for in-vehicle spatial audio systems. By employing this comprehensive approach, the invention aims to deliver a consistently high-quality spatial audio experience for vehicle occupants, regardless of the prevailing noise conditions.

In an embodiment, the method further includes applying a test scenario to the vehicle, the test scenario including engaging at least one component of the vehicle (e.g., engine, HVAC), driving the vehicle (e.g. for tyre noise measurement, wind noise, etc.), applying a physical force on the vehicle (e.g., a wind tunnel), playing back a sound outside of the vehicle, or any combination of the above. The method further includes recording, with at least one microphone placed inside the vehicle cabin, a sound inside the vehicle during the test scenario of the vehicle. The method further includes measuring at a plurality of locations inside the vehicle cabin, a set of sound features of the sound, the set of sound features corresponding to one or more of a volume of the sound, a frequency range of the sound, or a signal processing alteration. The signal processing alteration may include one or more of apparent source width (ASW), envelopment (LEV), perceived depth, source localisation, spatial balance, or immersion. or a combination of the above. The method further includes determining an algorithm to compensate for the measured set of sound features, the algorithm including a set of parameters, and associating the test scenario and the set of parameters with a pre-determined scenario.

Advantageously, a database of pre-determined scenarios can be set that each correlate to one or more 'sound ingress' scenarios (for example, a vehicle driving quickly which may include outside noise from wind and/or tyres, a vehicle driving in city traffic which may include outside noise from a city, a vehicle's HVAC system being switched on which may include a fan noise and/or other electrical noises, etc.). Accordingly, an in-vehicle audio system and, in particular, an in-vehicle spatial audio system may be trained to automatically detect a variety of scenarios to compensate for noise ingress from internal and/or external factors.

In an embodiment, the pre-determined scenario includes tyre noise, engine noise, transmission noise, suspension noise, noise from one or more electrical components of the vehicle, wind noise, or any combination of the above.

Advantageously, dynamic comprehensive noise compensation can be provided for a variety of scenarios which may include mitigating noise ingress for internal factors, external factors, or a combination of internal and external factors.

In a preferred embodiment, an apparatus for a vehicle is provided. The apparatus includes memory and a processor. The processor is operable to receive an input from at least one sensor, associate the input with one of a plurality of pre-determined scenarios stored in the memory, receive an audio signal, and apply a set of pre-determined parameters to the audio signal, the set of pre-determined parameters corresponding to the associated pre-determined scenario. The set of pre-determined parameters includes altering a sound offset of the audio signal in the vehicle, applying an equaliser to the audio signal, applying a spatial perception filter to the audio signal, or any combination of the above. The processor is further configured to send the audio signal with the applied set of pre-determined parameters to one or more speakers of the vehicle.

By matching an input from at least one sensor (such as an input from an internal or external microphone, an electronic component of the vehicle, etc.) to a pre-determined scenario and by applying a set of pre-determined parameters to the audio signal based on the pre-determined scenario, the detrimental effects of noise ingress can be effectively mitigated for a variety of driving conditions. Advantageously, an apparatus is provided that provides a consistent and immersive spatial audio experience to the vehicle occupants for a variety of driving conditions. In other words, the invention provides an in-vehicle audio system and, in particular, an in-vehicle spatial audio system that can deliver a consistently high-quality spatial audio experience for vehicle occupants, regardless of prevailing noise conditions. Accordingly, this allows next generation upmixers and native spatial audio processers to deliver a superior spatial experience, compared to legacy upmixers and native spatial audio processors.

In an embodiment, the spatial perception filter includes one or more of re-aligning a phantom centre of the audio signal in the vehicle or applying one or more signal processing operations (for example, signal processing altering operations) on one or more (spatially-relevant) components of the audio signal to preserve psychoacoustical perception of spatial depth, envelopment, immersion, and others. The one or more signal processing alteration operations may include one or more of apparent source width (ASW), envelopment (LEV), perceived depth, source localisation, spatial balance, or immersion. Advantageously, a more detailed user-focus can be provided which improves spatial perception and immersion can to the vehicle occupants.

In an embodiment, the input includes a signal received from one or more microphones, a processor, an ancillary component of the vehicle (for example, an HVAC (heating, ventilation and air-conditioning) system, a seat massage system, or any other mechanical/electric component that emits a noise when in operation), or any combination of the above.

Advantageously, noise ingress can effectively be mitigated for a variety of scenarios including external factors (such as wind noise, tyre noise, etc.), internal factors (such as internal vibrations from a movement of the vehicle, sound emitted from ancillary components of the vehicle such as the HVAC (heating, ventilation and air-conditioning) units or other components, or a combination of those features).

In an embodiment, wherein for the pre-determined parameters the processor is further configured to adjust a perceived volume, adjust one or more parameters of the equaliser, and/or adjusting emitted energy of sub-systems relevant for spatial perception, and psychoacoustically-modeled signal processing.

Advantageously, noise ingress can be mitigated more effectively by compensating for the sound ingress with an increase in volume and/or base equaliser of the audio signal.

In an embodiment, the processor is further configured to receive a second input from one of the at least one sensor and to determine a noise ingress level inside the vehicle cabin from the second input and based on the sensor type, wherein the noise ingress level is determine while the audio signal is played back with the applied set of pre-determined parameters. The processor is further configured to adjust at least one of the set of pre-determined parameters corresponding to the associated pre-determined scenario, apply the adjusted set of pre-determined parameters to the audio signal, and send, to the one or more speakers of the vehicle, the audio signal with the adjusted set of pre-determined parameters applied to the audio signal.

Advantageously, dynamic comprehensive noise compensation can be provided in real-time for in-vehicle spatial audio systems. By employing this comprehensive approach, the invention aims to deliver a consistently high-quality spatial audio experience for vehicle occupants, regardless of the prevailing noise conditions.

In an embodiment, the processor is further configured to receive, from a microphone, a signal corresponding to a sound recorded inside the vehicle cabin during a test scenario of the vehicle. The test scenario includes engaging at least one component of the vehicle (e.g., engine, tyres, HVAC), applying a physical force on the vehicle, driving the vehicle, playing back a sound outside of the vehicle, or any combination of the above. The processor is further configured to determine, from the signal, a set of sound features of the sound at a plurality of locations inside the vehicle cabin, the set of sound features corresponding to a volume of the sound, a frequency range of the sound, or a combination of the above. The processor is further configured to determine an algorithm to compensate for the measured set of sound features, the algorithm including a set of parameters, and to associate the test scenario and the set of parameters with a pre-determined scenario.

Advantageously, a database of pre-determined scenarios can be set that each correlate to one or more 'sound ingress' scenarios (for example, a vehicle driving quickly which may include outside noise from wind and/or tyres, a vehicle driving in city traffic which may include outside noise from a city, a vehicle's HVAC system being switched on which may include a fan noise and/or other electrical noises, etc.). Accordingly, an in-vehicle audio system and, in particular, an in-vehicle spatial audio system may be trained to automatically detect a variety of scenarios to compensate for noise ingress from internal and/or external factors.

In an embodiment, the pre-determined scenario includes tyre noise, engine noise, transmission noise, suspension noise, noise from one or more electrical components of the vehicle, wind noise, or any combination of the above.

Advantageously, dynamic comprehensive noise compensation can be provided for a variety of scenarios which may include mitigating noise ingress for internal factors, external factors, or a combination of internal and external factors.

In a preferred embodiment, a vehicle is provided. The vehicle includes at least one speaker, at least one microphone, and the apparatus as described above.

Advantageously, a vehicle is provided that can provide a consistent and immersive spatial audio experience to the vehicle occupants for a variety of driving conditions.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 shows an example of a vehicle experiencing sound ingress from sound outside of the vehicle as well as sound inside the vehicle;
Figure 2 a shows a computer including a processor and memory according to the invention;
Figure 3 shows a vehicle including one or more speakers, one or more microphones, and the computer of Figure 2 according to the invention;
Figure 4 depicts a flow chart of a method of compensating for sound ingress in a vehicle cabin according to the invention;
Figure 5 depicts a flow chart of further methods of compensating for sound ingress in a vehicle cabin according to alternative embodiments of the invention; and
Figure 6 depicts a flow chart of further methods of compensating for sound ingress in a vehicle cabin according to alternative embodiments of the invention.

### DETAILED DESCRIPTION

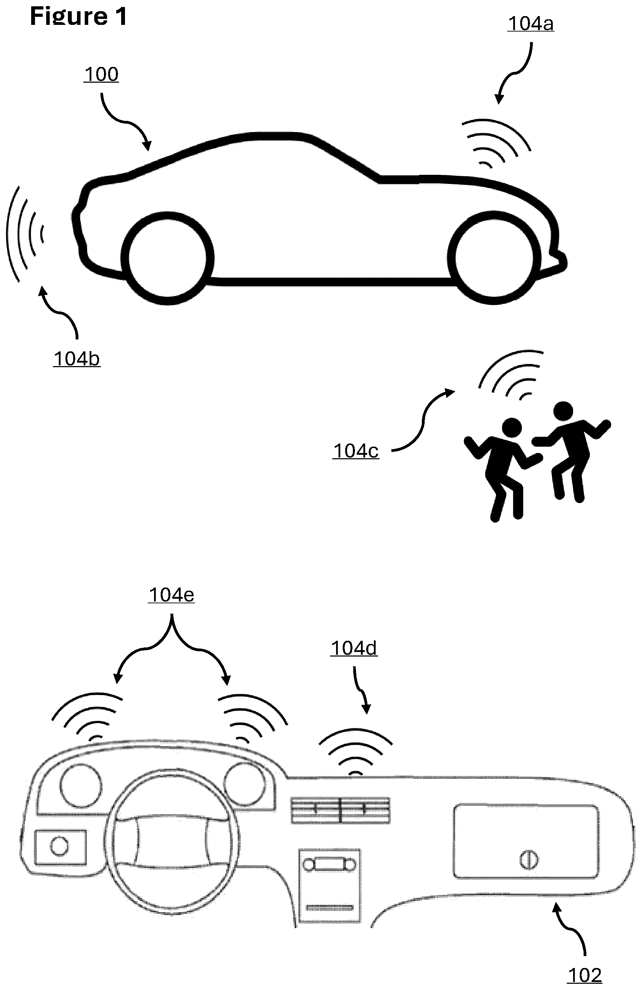

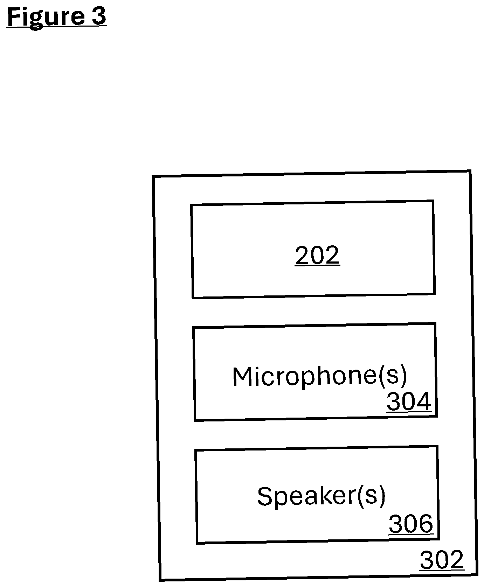

Figure 1 illustrates a vehicle 100 and the interior of a vehicle 102. The interior of the vehicle 102 (i.e. the vehicle's cabin) depicted shows a frontal view of the vehicle's interior and the vehicle's dashboard. The interior of the vehicle 102 is not limited to this example and includes all components, arrangements, systems and features within the vehicle's cabin. The vehicle's cabin 102 may include an in-vehicle audio system (as described in figure 3) which may playback audio (for example, music, audiobooks, navigational instructions, or any other audio content) to the one or more vehicle occupants. Figure 1 illustrates a plurality of sounds 104a-104e that are emitted by the vehicle 100 or by an environment around the vehicle 100. The plurality of sounds 104a-104e may be considered as noise and, in particular, unwanted noise to the one or more vehicle occupants within the vehicle's cabin 102 when listening to audio content played back by the in-vehicle audio system.

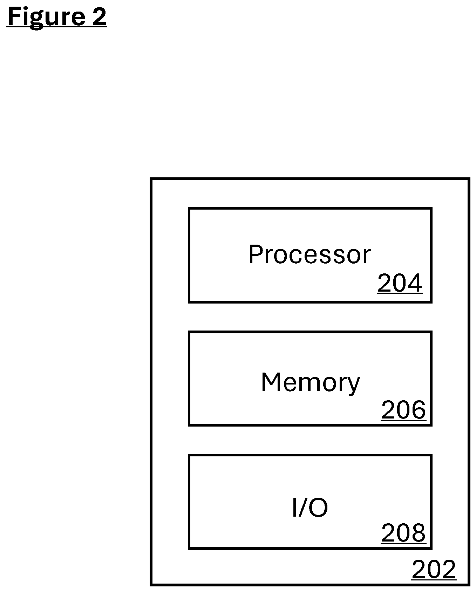

The present invention proposes a method and an apparatus to compensate for the unwanted noises 104a-104e. In an embodiment, compensating for the unwanted noises 104a-104e may include applying (for example, by a processor of a computer as described in figure 2 below) an algorithm to the audio content (i.e. the audio signal which includes the music, the audiobook, the navigational instructions, etc.) to compensate for the unwanted noises 104a-104e.

The noises may include one or more external noises 104a, 104b, 104c. The one or more external noises 104a-104c may include noises that are created by the vehicle 100 such as engine noise 104a, exhaust noise 104b, tyre and/or road noise, transmission noise (for example, during up and/or down-shifting), suspension noise (for example, when driving over a bumpy surface), wind noise (for example, due to the vehicle driving at quick speed), or any other noise created by one or more components that are external to the vehicle's cabin 102. The one or more external noises 104a-104c may include noises that are caused by the environment 104c of the vehicle 100. Environmental noise 104 may include noise caused by the weather (for example, rain, hail, wind, snow, etc.), noise caused by other vehicles in the vehicle's 100 vicinity (for example, engine noise, honking, or similar during traffic), noise caused by one or more people in the vicinity (for example, pedestrians speaking, shouting, singing, etc.), one or more animals in the vicinity (for example, a dog barking, birds chirping, etc.), machinery or other ancillary noises (for example, factory noises, etc.), or any other type of noise that may be within the vicinity of the vehicle 100.

The noises may include one or more internal noises 104d, 104e. The one or more internal noises 104d, 104e may include noises that are created by components of the vehicle 100 inside the vehicle's cabin 102. For example, current vehicles have a plurality of ancillary electro-mechanical components which may include an HVAC system, massaging chairs, motors for other moving components, etc. Each of these internal electro-mechanical may produce a level of noise when they are activated (for example, an HVAC system when activated will blow air which may include noise from a fan and perceived noise due to the movement of air).

The algorithm dynamically maintains the spatial properties of the in-vehicle audio system (and thus, the playback of audio by the in-vehicle audio system) across diverse driving conditions by mitigating the effects of noise ingress from the one or more noises 104a-104e as described above. For example, when one or more sensors (for example, one or more internal and/or external microphones, and/or a GPS navigation system) detect that the vehicle 100 is driving through a city, the in-vehicle audio system may select a pre-determined algorithm that compensates for external environmental noises 104c that may include noise from one or more other vehicles, one or more pedestrians, one or more dogs, etc. In another example, when motorway driving is detected (for example, by a GPS navigation system, by a speedometer, by one or more microphones detecting tyre and/or wind noise), the in-vehicle audio system may select a pre-determined algorithm that compensates for engine noise 104a, wind noise, and tyre noise. When excessive engine noise 104a and/or exhaust noise 104b are detected, the in-vehicle audio system may select a pre-determined algorithm that compensates for engine noise 104a and/or exhaust noise 104b. The above examples are merely intended to provide an understanding of the invention. The variety of detected noises, the way they are detected and the types of pre-determined algorithm are not limited by the above examples.

In an embodiment, the algorithm includes applying a psychoacoustic model. The psychoacoustic model analyses real-time data (for example, one or more of the noises 104a-104e) from onboard sensors (for example, one or more microphones, accelerometers, etc.) and vehicle information (for example, the vehicle's speed, the volume or other audio settings of the audio content being played back, etc.) to estimate an overall noise level. Based on this estimation, the computer may select a pre-determined algorithm to compensate for the overall noise level. Alternatively, or additionally, the algorithm may dynamically adjust one or more parameters of a selected pre-determined algorithm. Each pre-determined algorithm may include a plurality of high-level attributes (or parameters) of spatial perception which may include envelopment (perceived immersion), image width and depth (perceived lateral and forward-backward positioning of sound sources), and apparent localization of sound events within the vehicle's cabin 102.

In an embodiment, each of the pre-determined algorithms may be determined in a training phase. The training phase may include recording one or more noises (for example, one or more of the noises 104a-104e) in the vehicle cabin 102 in a test scenario and applying one or more audio parameters to an input audio signal. The one or more audio parameters may be adjusted manually in the training phase to minimise a level of noise ingress without affecting the sound quality of the audio signal. The training phase may include conducting one or more listening tests manually (for example, with a trained panel) to assess the effectiveness of noise compensation for each determined algorithm (each determined scenario) in maintaining desired spatial perception under varying noise conditions.

The algorithm adjust the one or more parameters with various signal processing techniques. For example, the algorithm may include system equalization to tailor the frequency response to compensate for noise-induced frequency masking. The algorithm may include speaker gain and delay functions to manipulate the perceived location of sound sources. The algorithm may include channel processing to optimize the processing of individual audio channels to enhance spatial effects. The algorithm may control surround and immersive upmixer parameters to maintain a consistent spatial experience despite noise variations. By employing this comprehensive approach, the invention provides a consistently high-quality spatial audio experience for vehicle occupants, regardless of the prevailing noise conditions.

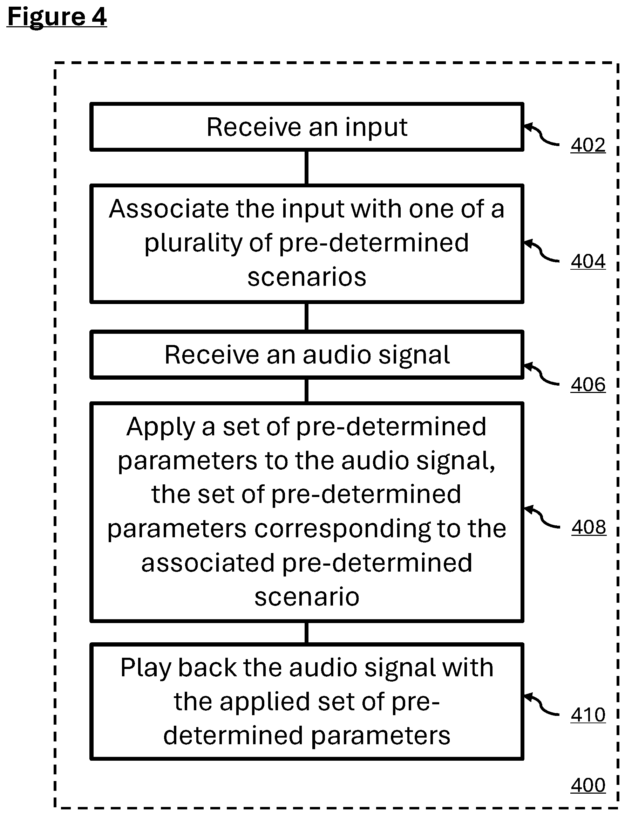

Figure 2 depicts an apparatus 202 (for example, a computer) including a processor 204, memory 206, and an input/output (I/O) interface 208. The processor 204 is operable to carry out a set of actions and/or instructions which may be stored on the memory 206. The set of actions may include the algorithm and/or the one or more pre-determined algorithms as described in figure 1 above. The computer 202 may be a standalone unit dedicated to carry out the method and steps as defined herein (for example, as described in figures 4 to 6 below). The computer 202 may be an electronic control unit (ECU) of a (for example, the vehicle 100 described in figure 1, or the vehicle described in figure 3 below). Alternatively, the computer 202 may be part of an ECU of a vehicle (for example the vehicle described in figures 1 or 3 herein).

The processor 204 receives an input from at least one sensor of a vehicle (such as the vehicle described in figures 1 and 3 herein). In an embodiment, the input includes a signal received from one or more microphones, a processor, an ancillary component of the vehicle (for example, an HVAC (heating, ventilation, and air-conditioning) system, a seat massage system, or any other mechanical/electric component that emits a noise when in operation), or any combination of the above. Advantageously, noise ingress can effectively be mitigated for a variety of scenarios including external factors (such as wind noise, tyre noise, etc.), internal factors (such as internal vibrations from a movement of the vehicle, sound emitted from ancillary components of the vehicle such as the HVAC (heating, ventilation, and air-conditioning) units or other components, or a combination of those features).

A plurality of pre-determined scenarios (corresponding to pre-determined algorithms, such as the pre-determined algorithms described above in figure 1) may be stored on the memory 206. Each of the pre-determined scenarios may include a set of pre-determined parameters. Each of the pre-determined parameters may be audio parameters.

Subsequent to receiving the input, the processor 204 associates or matches the input with one of the plurality of pre-determined scenarios stored in the memory 206. Associating or matching the input may include determining that the input is received from a specific sensor and matching the input received from the specific sensor to a pre-determined scenario that is linked to an input to that specific sensor (in other words, the pre-determined scenario is a pre-determined algorithm that can compensate for noise ingress for noise received from that specific sensor). The specific sensor may, for example, be an internal sensor or an external sensor. The specific sensor may be a sensor located at a specific part of the vehicle (for example, within a wheel well or under the dashboard). Associating or matching the input may include determining that the input corresponds to a sound input that matches (i.e. it is similar or identical to) a pre-recorded sound file linked to a pre-determined scenario. For example, the input may be a sound input that matches tyre noise, engine noise, exhaust noise, or any other noise as described above. A pre-determined scenario may be linked to one or a plurality of the noises as described above. For example, a pre-determined scenario may be linked to tyre noise. A pre-determined scenario may be linked to two or more noises (for example, tyre noise and engine noise). A pre-determined scenario may be linked to a type of noise and a sub-type within that type of noise. For example, a pre-determined scenario may be linked to a specific tyre noise and a different pre-determined scenario may be linked to a different tyre noise. The input may be a signal sent from an ancillary component of the vehicle (for example, the HVAC system, the speedometer, the navigation system, etc.) to the processor 204. The processor 204 may match the receipt of that signal with a pre-determined scenario (for example, linked to the switching on of the HVAC system, the indication of a certain speed of the vehicle, the location of the vehicle, etc.).

These examples are merely provided as some examples and the number of different pre-determined scenarios and types of input are not limited to these examples.

The processor 204 receives an audio signal (which may be stored on the memory 206 or may be stored from a physical and/or cloud media coupled to the computer 202). The audio signal be a data file such as, but not limited to, music, an audiobook, navigation instructions etc. Subsequent to association/matching the input with one of the plurality of pre-determined scenarios stored on the memory 206, the processor 204 selects the associated/matched pre-determined scenario and applies the set of pre-determined parameters of the associated/matched to the audio signal.

The set of pre-determined parameters includes altering a sound offset of the audio signal in the vehicle, applying an equaliser to the audio signal, applying a spatial perception filter to the audio signal, or any combination of the above. The processor 204 sends the audio signal with the applied set of pre-determined parameters to one or more speakers of the vehicle where it will be played back in the vehicle cabin 102 to the vehicle's occupants.

By matching an input from at least one sensor (such as an input from an internal or external microphone, an electronic component of the vehicle, etc.) to a pre-determined scenario and by applying a set of pre-determined parameters to the audio signal based on the pre-determined scenario, the detrimental effects of noise ingress can be effectively mitigated for a variety of driving conditions. Advantageously, an apparatus is provided that provides a consistent and immersive spatial audio experience to the vehicle occupants for a variety of driving conditions. In other words, the invention provides an in-vehicle audio system and, in particular, an in-vehicle spatial audio system that can deliver a consistently high-quality spatial audio experience for vehicle occupants, regardless of prevailing noise conditions. Accordingly, this allows next generation upmixers and native spatial audio processers to deliver a superior spatial experience, compared to legacy upmixers and native spatial audio processors.

In an embodiment, the one or more sensors may include one or more microphones, one or more cameras, one or more motion sensors, accelerometers, a location sensor (for example, a navigation system such as GPS, GLONASS or similar), one or more touch sensors or any other type of sensor.

The spatial perception filter may include one or more of re-aligning a phantom centre of the audio signal in the vehicle, or applying one or more signal processing operations (for example, signal processing altering operations) on one or more (spatially-relevant) components of the audio signal to preserve psychoacoustical perception of spatial depth, envelopment, immersion, and others. The one or more signal processing alteration operations may include one or more of apparent source width (ASW), envelopment (LEV), perceived depth, source localisation, spatial balance, or immersion. Advantageously, a more detailed user-focus can be provided which improves spatial perception and immersion can to the vehicle occupants.

Adjusting the pre-determined parameters may further include the processor 204 adjusting a perceived volume of the audio input. A perceived volume compared is a level of loudness at which the vehicle occupants perceive the audio input to be played back by the loudspeakers of the vehicle. The perceived volume may be lower (i.e. quieter) than the actual volume set by the computer 202 (or manually by the vehicle occupants) if there is substantial noise ingress. This is because the noise ingress will set a new baseline volume for the vehicle occupants and may drown out the audio input played back by the loudspeakers. For example, if audio is played back in a stationary vehicle that is in a quiet environment (i.e. there is little or no noise ingress) and the audio is set at a specific volume level (for example, level 10 out of 15 levels), then a vehicle occupant may perceive this volume as 'loud'. However, if that volume is not adjusted and the vehicle is now traveling at high speed along the motorway, the vehicle may experience significant noise ingress in the cabin (for example, tyre noise, wind noise, engine noise, etc.). This noise ingress increases the overall volume in the vehicle cabin 102 which means that the volume of the audio being played back relative to the noise ingress is lower (despite still being at level 10 out of 15 levels). Accordingly, the vehicle occupant may now perceive the audio being played back at a 'quiet' level. Increasing the perceived volume may include increasing the actual volume (for example to level 13 out of 15 levels) in that scenario so that the volume of the audio being played back is 'loud' relative to the noise ingress.

Alternatively, or additionally, the processor 204 may adjust one or more parameters of the equaliser. This may include increasing a base parameter (for example, the level of base compared to treble and mid-range) of the equaliser. Noise ingress can cut out the base range of audio played back by the vehicle's loudspeakers. Alternatively, or additionally, the processor 204 may adjust emitted energy of sub-systems relevant for spatial perception, and psychoacoustically-modeled signal processing. Accordingly, increasing the base range can help mitigate noise ingress effectively. Advantageously, noise ingress can be mitigated more effectively by compensating for the sound ingress with an increase in volume and/or base equaliser of the audio signal.

The processor 204 may further be configured to receive a second input from one of the at least one sensors. The second input may be receive subsequent to the first input. The second input may include a signal received from one or more microphones, a processor, an ancillary component of the vehicle (for example, an HVAC (heating, ventilation, and air-conditioning) system, a seat massage system, or any other mechanical/electric component that emits a noise when in operation), or any combination of the above. The processor 204 may determine a noise ingress level inside the vehicle cabin from the second input and based on the sensor type (for example, microphone, camera, motion sensor, touch sensor, navigation, internal sensor, external sensor, etc.). The noise ingress level is determined while the audio signal is played back with the applied set of pre-determined parameters. The processor 204 may adjust at least one of the set of pre-determined parameters corresponding to the associated pre-determined scenario and subsequently apply the adjusted set of pre-determined parameters to the audio signal. The processor 204 may subsequently send the audio signal with the adjusted set of pre-determined parameters applied to the audio signal to the one or more speakers of the vehicle.

Advantageously, dynamic comprehensive noise compensation can be provided in real-time for in-vehicle spatial audio systems. By employing this comprehensive approach, the invention aims to deliver a consistently high-quality spatial audio experience for vehicle occupants, regardless of the prevailing noise conditions.

In an embodiment, each of the pre-determined scenarios (algorithms) may be determined in a training phase as described above in figure 1. In the training phase the processor 204 may receive, from the one or more sensors (such as a microphone which may be in the vehicle cabin 102 or external to the vehicle), a signal corresponding to a sound recorded inside the vehicle cabin during a test scenario of the vehicle. The test scenario may include engaging at least one component of the vehicle (for example, engaging the engine, driving the vehicle, engaging the HVAC). The test scenario may include applying a physical force on the vehicle (for example, applying wind to the vehicle in a wind tunnel). The test scenario may include driving the vehicle. The test scenario may include playing back one or more sound outside of the vehicle (the one or more sounds corresponding, for example, to environmental sounds 104c as described above). The test scenario may include any combination of the above. The processor 204 may determine, from the signal, a set of sound features of the sound at a plurality of locations inside the vehicle cabin, the set of sound features corresponding to a volume of the sound, a frequency range of the sound, or a combination of the above. The processor 204 may determine an algorithm to compensate for the measured set of sound features, the algorithm including a set of parameters. The processor 204 may associate (i.e. match, link) the test scenario and the set of parameters with a pre-determined scenario.

Advantageously, a database of pre-determined scenarios can be set that each correlate to one or more 'sound ingress' scenarios (for example, a vehicle driving quickly which may include outside noise from wind and/or tyres, a vehicle driving in city traffic which may include outside noise from a city, a vehicle's HVAC system being switched on which may include a fan noise and/or other electrical noises, etc.). Accordingly, an in-vehicle audio system and, in particular, an in-vehicle spatial audio system may be trained to automatically detect a variety of scenarios to compensate for noise ingress from internal and/or external factors.

In an embodiment, the pre-determined scenario may include tyre noise, engine noise, transmission noise, suspension noise, noise from one or more electrical components of the vehicle, wind noise, environmental noise or any combination of the above. Advantageously, dynamic comprehensive noise compensation can be provided for a variety of scenarios which may include mitigating noise ingress for internal factors, external factors, or a combination of internal and external factors.

Figure 3 shows a vehicle 302 including the apparatus 202 as described in figure 2, one or more microphones 304 and one or more speakers 306. The apparatus 202 is coupled (by means of a wired or wireless connection to the one or more speakers 306. The apparatus 202 may be coupled (by means of a wired or wireless connection) to the one or more microphones 306. The vehicle 302 may be the same vehicle as vehicle 100 described in figure 1. The one or more microphones may be inside the vehicle cabin 102 or external to the vehicle cabin 102. The one or more speakers may be within the vehicle cabin 102. The one or more speakers may be loudspeakers including one or more drivers, separate drivers, or any type of playback device capable of playing back audio content (including any type of playback device that can play back audio and other types of content). The vehicle 302 may include one or more sensors (not shown). The one or more sensors may each be coupled (by means of a wired or wireless connection) to the apparatus 202. The one or more sensors may include one or more microphones, one or more cameras, one or more motion sensors, accelerometers, a location sensor (for example, a navigation system such as GPS, GLONASS or similar), one or more touch sensors or any other type of sensor.

Advantageously, a vehicle is provided that can provide a consistent and immersive spatial audio experience to the vehicle occupants for a variety of driving conditions.

Figure 4 shows a flow chart of a method 400 of compensating for sound ingress in a vehicle cabin, as described above with reference to figures 1, 2 and 3, according to the invention. The method includes at 402 receiving an input from at least one sensor and at 404 associating the input with one of a plurality of pre-determined scenarios. The method includes at 406 receiving an audio signal. The method includes at 408 applying a set of pre-determined parameters to the audio signal, the set of pre-determined parameters corresponding to the associated pre-determined scenario. The set of pre-determined parameters includes altering a sound offset of the audio signal in the vehicle, applying an equaliser to the audio signal (spectral), applying a spatial perception filter to the audio signal, or any combination of the above. The method further includes at 410 playing back the audio signal with the applied set of pre-determined parameters.

By matching an input from at least one sensor (such as an input from an internal or external microphone, an electronic component of the vehicle, etc.) to a pre-determined scenario and by applying a set of pre-determined parameters to the audio signal based on the pre-determined scenario, the detrimental effects of noise ingress can be effectively mitigated for a variety of driving conditions. Advantageously, a consistent and immersive spatial audio experience is provided to the vehicle occupants for a variety of driving conditions. In other words, the invention provides an in-vehicle audio system and, in particular, an in-vehicle spatial audio system that can deliver a consistently high-quality spatial audio experience for vehicle occupants, regardless of prevailing noise conditions. Accordingly, this allows next generation upmixers and native spatial audio processers to deliver a superior spatial experience, compared to legacy upmixers and native spatial audio processors.

In an embodiment, the spatial perception filter may include one or more of includes re-aligning a phantom centre of the audio signal in the vehicle, or applying one or more signal processing operations (for example, signal processing altering operations) on one or more (spatially-relevant) components of the audio signal to preserve psychoacoustical perception of spatial depth, envelopment, immersion, and others. The one or more signal processing alteration operations may include one or more of apparent source width (ASW), envelopment (LEV), perceived depth, source localisation, spatial balance, or immersion. Advantageously, a more detailed user-focus can be provided which improves spatial perception and immersion can to the vehicle occupants.

In an embodiment, the input includes a signal received from one or more microphones, a processor, an ancillary component of the vehicle (for example, an HVAC (heating, ventilation and air-conditioning) system, a seat massage system, or any other mechanical/electric component that emits a noise when in operation), or any combination of the above.

Advantageously, noise ingress can effectively be mitigated for a variety of scenarios including external factors (such as wind noise, tyre noise, etc.), internal factors (such as internal vibrations from a movement of the vehicle, sound emitted from ancillary components of the vehicle such as the HVAC (heating, ventilation and air-conditioning) units or other components, or a combination of those features).

In an embodiment, the pre-determined parameters further includes adjusting a perceived volume, adjusting one or more parameters of the equaliser, and/or adjusting emitted energy of sub-systems relevant for spatial perception, and psychoacousticaly-modeled signal processing. Advantageously, noise ingress can be mitigated more effectively by compensating for the sound ingress with an increase in volume and/or base equaliser of the audio signal.

In an embodiment, the pre-determined scenario includes tyre noise, engine noise, transmission noise, suspension noise, noise from one or more electrical components of the vehicle, wind noise, or any combination of the above.

Advantageously, dynamic comprehensive noise compensation can be provided for a variety of scenarios which may include mitigating noise ingress for internal factors, external factors, or a combination of internal and external factors.

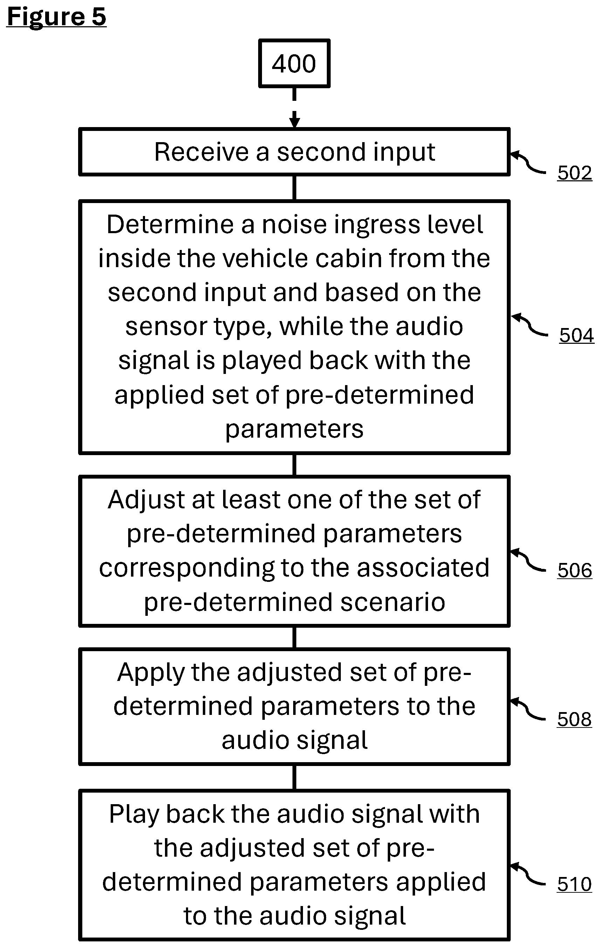

Figure 5 shows additional method steps of of compensating for sound ingress in a vehicle cabin which can be combined with the method as described above with regard to figure 4 and with the arrangement as described above with reference to figures 1, 2 and 3.

The method may include at 502 receiving a second input from one of the at least one sensor. The method may further include at 504 determining a noise ingress level inside the vehicle cabin from the second input and based on the sensor type, wherein the noise ingress level is determined while the audio signal is played back with the applied set of pre-determined parameters. The method may further include at 506 adjusting at least one of the set of pre-determined parameters corresponding to the associated pre-determined scenario. The method may further include at 508 applying the adjusted set of pre-determined parameters to the audio signal. At 510, the method may include playing back the audio signal with the adjusted set of pre-determined parameters applied to the audio signal.

Advantageously, dynamic comprehensive noise compensation can be provided in real-time for in-vehicle spatial audio systems. By employing this comprehensive approach, the invention aims to deliver a consistently high-quality spatial audio experience for vehicle occupants, regardless of the prevailing noise conditions.

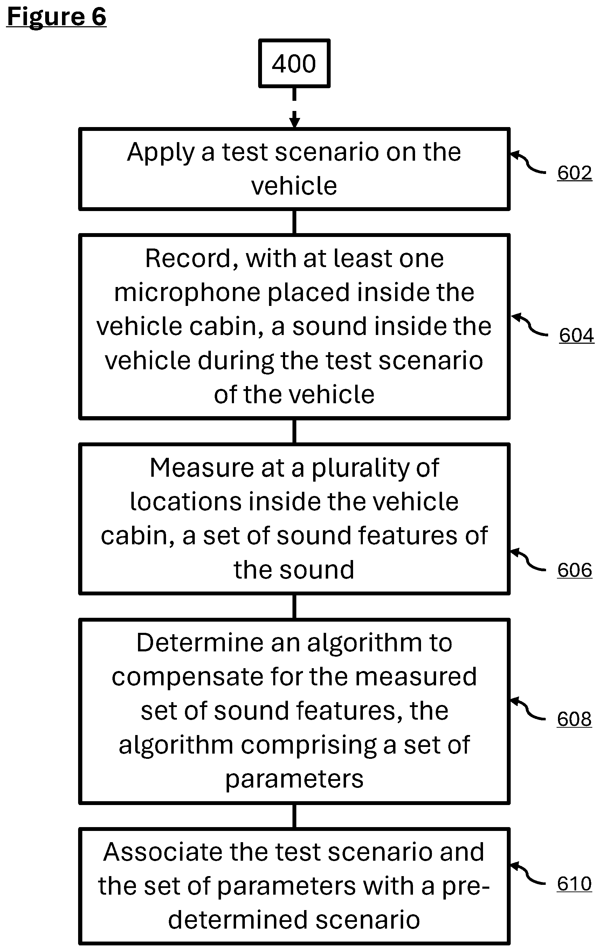

Figure 6 shows additional method steps of of compensating for sound ingress in a vehicle cabin which can be combined with the method as described above with regard to figures 4 and 5 and with the arrangement as described above with reference to figures 1, 2 and 3.

The method may include at 602 applying a test scenario to the vehicle, the test scenario including engaging at least one component of the vehicle (e.g., engine, HVAC), driving the vehicle (e.g. for tyre noise measurement, wind noise, etc.), applying a physical force on the vehicle (e.g., a wind tunnel), playing back a sound outside of the vehicle, or any combination of the above. The method may further include at 604 recording, with at least one microphone placed inside the vehicle cabin, a sound inside the vehicle during the test scenario of the vehicle. The method may further include at 606 measuring at a plurality of locations inside the vehicle cabin, a set of sound features of the sound, the set of sound features corresponding to one or more of a volume of the sound, a frequency range of the sound, or a signal processing alteration. The signal processing alteration may include one or more of apparent source width (ASW), envelopment (LEV), perceived depth, source localisation, spatial balance, or immersion. The method may further include at 608 determining an algorithm to compensate for the measured set of sound features, the algorithm including a set of parameters. The method may further include at 610 associating the test scenario and the set of parameters with a pre-determined scenario.

Advantageously, a database of pre-determined scenarios can be set that each correlate to one or more 'sound ingress' scenarios (for example, a vehicle driving quickly which may include outside noise from wind and/or tyres, a vehicle driving in city traffic which may include outside noise from a city, a vehicle's HVAC system being switched on which may include a fan noise and/or other electrical noises, etc.). Accordingly, an in-vehicle audio system and, in particular, an in-vehicle spatial audio system may be trained to automatically detect a variety of scenarios to compensate for noise ingress from internal and/or external factors.

## Claims

1. A method of compensating for sound ingress in a vehicle cabin, the method comprising:
receiving an input from at least one sensor;
associating the input with one of a plurality of pre-determined scenarios;
receiving an audio signal;
applying a set of pre-determined parameters to the audio signal, the set of pre-determined parameters corresponding to the associated pre-determined scenario, wherein the set of pre-determined parameters comprise:
altering a sound offset of the audio signal in the vehicle,
applying an equaliser to the audio signal,
applying a spatial perception filter to the audio signal, or
any combination of the above; and
playing back the audio signal with the applied set of pre-determined parameters.

2. The method of claim 1, wherein the spatial perception filter comprises one or more of:
re-aligning a phantom centre of the audio signal in the vehicle; or
applying one or more signal processing altering operations on one or more components of the audio signal, the one or more signal processing altering operations comprising one or more of:
apparent source width (ASW),
envelopment (LEV),
perceived depth,
source localisation,
spatial balance, or
immersion.

3. The method of claims 1 or 2, wherein the input comprises a signal received from:
one or more microphones;
a processor;
an ancillary component of the vehicle; or
any combination of the above.

4. The method of claims 1 to 3, wherein the pre-determined parameters further comprises:
adjusting a perceived volume;
adjusting one or more parameters of the equaliser; and/or
adjusting emitted energy of sub-systems relevant for spatial perception and psychoacoustically-modeled signal processing.

5. The method of claims 1 to 4 further comprising:
receiving a second input from one of the at least one sensors;
determining a noise ingress level inside the vehicle cabin from the second input and based on the sensor type, wherein the noise ingress level is determined while the audio signal is played back with the applied set of pre-determined parameters;
adjusting at least one of the set of pre-determined parameters corresponding to the associated pre-determined scenario;
applying the adjusted set of pre-determined parameters to the audio signal; and
playing back the audio signal with the adjusted set of pre-determined parameters applied to the audio signal.

6. The method of claims 1 to 5 further comprising:
applying a test scenario to the vehicle, the test scenario comprising:
engaging at least one component of the vehicle,
driving the vehicle applying a physical force on the vehicle,
playing back a sound outside of the vehicle, or
any combination of the above;
recording, with at least one microphone placed inside the vehicle cabin, a sound inside the vehicle during the test scenario of the vehicle;
measuring at a plurality of locations inside the vehicle cabin, a set of sound features of the sound, the set of sound features corresponding to one or more of:
a volume of the sound,
a frequency range of the sound, or
a signal processing alteration, the signal processing alteration comprising one or more of:
apparent source width (ASW),
envelopment (LEV),
perceived depth,
source localisation,
spatial balance, or
immersion;
determining an algorithm to compensate for the measured set of sound features, the algorithm comprising a set of parameters; and
associating the test scenario and the set of parameters with a pre-determined scenario.

7. The method of claim 6, wherein the pre-determined scenario comprises:
tyre noise;
engine noise;
transmission noise;
suspension noise;
noise from one or more electrical components of the vehicle;
wind noise; or
any combination of the above.

8. An apparatus for a vehicle, the apparatus comprising:
memory; and
a processor, the processor operable to:
receive an input from at least one sensor;
associate the input with one of a plurality of pre-determined scenarios stored in the memory;
receive an audio signal;
apply a set of pre-determined parameters to the audio signal, the set of pre-determined parameters corresponding to the associated pre-determined scenario, wherein the set of pre-determined parameters comprise:
altering a sound offset of the audio signal in the vehicle,
applying an equaliser to the audio signal,
applying a spatial perception filter to the audio signal, or
any combination of the above; and
send the audio signal with the applied set of pre-determined parameters to one or more speakers of the vehicle.

9. The apparatus of claim 8, wherein the spatial perception filter comprises one or more of:
re-aligning a phantom centre of the audio signal in the vehicle; or
applying one or more signal processing altering operations on one or more components of the audio signal, the one or more signal processing altering operations comprising one or more of:
apparent source width (ASW),
envelopment (LEV),
perceived depth,
source localisation,
spatial balance, or
immersion.

10. The apparatus of claims 8 or 9, wherein the input comprises a signal received from:
one or more microphones;
a processor;
an ancillary component of the vehicle; or
any combination of the above.

11. The apparatus of any one of claims 8 to 10, wherein for the pre-determined parameters the processor is further configured to:
adjust a perceived volume;
adjusting one or more parameters of the equaliser; and/or
adjusting emitted energy of sub-systems relevant for spatial perception and psychoacoustically-modeled signal processing.

12. The apparatus of any one of claims 8 to 11, wherein the processor is further configured to:
receive a second input from one of the at least one sensor;
determine a noise ingress level inside the vehicle cabin from the second input and based on the sensor type, wherein the noise ingress level is determined while the audio signal is played back with the applied set of pre-determined parameters;
adjust at least one of the set of pre-determined parameters corresponding to the associated pre-determined scenario;
apply the adjusted set of pre-determined parameters to the audio signal; and
send, to the one or more speakers of the vehicle, the audio signal with the adjusted set of pre-determined parameters applied to the audio signal.

13. The apparatus of any one of claims 1 to 12, wherein the processor is further configured to:
receive, from a microphone, a signal corresponding to a sound recorded inside the vehicle cabin during a test scenario of the vehicle, wherein the test scenario comprises:
engaging at least one component of the vehicle,
applying a physical force on the vehicle,
playing back a sound outside of the vehicle, or
any combination of the above;
determine, from the signal, a set of sound features of the sound at a plurality of locations inside the vehicle cabin, the set of sound features corresponding to:
a volume of the sound,
a frequency range of the sound, or
a combination of the above;
determine an algorithm to compensate for the measured set of sound features, the algorithm comprising a set of parameters; and
associate the test scenario and the set of parameters with a pre-determined scenario.

14. The apparatus of claim 13, wherein the pre-determined scenario comprises:
tyre noise;
engine noise;
transmission noise;
suspension noise;
noise from one or more electrical components of the vehicle;
wind noise; or
any combination of the above.

15. A vehicle comprising:
at least one speaker;
at least one microphone; and
the apparatus of claims 7 to 14.
